# EUROPEAN PATENT APPLICATION

(11) **EP 4 763 589 A1**
(43) Date of publication of application: **24.06.2026**
(21) Application number: 24220941.9
(22) Date of filing: 18.12.2024
(51) Int. Cl.: B60L 53/14, B25J 5/00, B25J 19/02, B60L 53/30, B60L 53/35, B60L 53/37

(54) **ELECTRIC VEHICLE CHARGING SYSTEM**

(71) Applicant: Ganz KK Ltd., 1101 Budapest (HU); University of Dunaújváros, 2400 Dunaújváros (HU)
(72) Inventor: Szabó, Gergö István, 2093 Budajenö (HU); Király, Zoltán, 2459 Rácalmás (HU); Odry, Péter, 24413 Palics (RS); Odry, Ákos, 6723 Szeged (HU); Burkus, Ervin, 24000 Subotica (RS); Tadic, Vladimir, 21235 Temerin (RS); Szakáll, Tibor, 24000 Subotica (RS); Kecskés, István, 6640 Csongrád (HU); Leitold, Ferenc, 8200 Veszprém (HU); Jávor, Benedek, 1118 Budapest (HU); Vörös, Balázs, 1106 Budapest (HU)
(74) Representative: Scholz, Volker

(57) **Abstract**

The invention relates to an electric vehicle charging robot system for the automatic charging of electric vehicles

## Description

The invention relates to an electric vehicle charging robot system for the automatic charging of electric vehicles, capable of simultaneously servicing a larger number of vehicles, while the increase in the number of vehicles only minimally raises the system's costs. In addition, the system flexibly accommodates the varying placement of charging connectors on vehicles. All this is achieved with a collaborative robot equipped with a charging gun gripping unit and a two-degree-of-freedom rail-arm system, which includes a movable cart running on a rail system and an outstretched arm mounted on it.

### Technical Background

With the spread of electric vehicles, there is a growing demand for increasing the number of charging stations. However, electric vehicles currently take significantly longer to charge compared to refueling internal combustion engine vehicles. This inspires charging station manufacturers and vehicle manufacturers to enable automatic charging for vehicles. Such a development would significantly improve the utilization and economic efficiency of the charging stations.

Numerous attempts have been made to enable the automatic charging of electric vehicles. One of the advantages of automatic charging is the improved utilization of the charging stations. However, in most cases, these systems are vehicle-type specific, as the varying placement of vehicle charging connectors requires relatively precise positioning of the vehicle at the charging station.

The Graz University of Technology and the Institute of Automotive Engineering [https://www.tugraz.at/en/tu-graz/services/news-stories/tu-graz-news/singleview/article/der-mobile-roboter-der-das-e-auto-laedt0] have developed an automated mobile robot that automatically locates and charges electric vehicles while they wait in parking lots. The machine draws electricity from the local power grid, to which it is connected via cables.

In patent DE102015213161 by VOLKSWAGEN AKTIENGESELLSCHAFT, titled "Roboter und Verfahren zum automatisierten Stecken eines Ladesteckers in eine Schnittstelle eines Fahrzeugs" a charging robot is described that automatically inserts the charging plug into the vehicle's interface. The robot includes at least one actuator and at least one sensor device for detecting the interface. The robot is designed to determine the location and type of the interface using data stored in the sensor device after detecting the interface. Based on the type of interface, it selects the appropriate charging plug and then automatically inserts the plug into the interface.

The invention described in patent application WO2023056997 by ŠINDELKA & LACHMANNOVÁ ADVOKÁTI S.R.O. (Czech), titled "MOBILE CHARGING STATION FOR ELECTRIC CARS" relates to a mobile charging station for electric vehicles. The station consists of a mobile unit equipped with a hydrogen fuel cell, a hydrogen storage tank, an inverter for high voltage, an inverter for low voltage, a high-voltage battery, a charging plug and a robotic arm for the automatic connection of the charging plug to the electric vehicle interface. The mobile unit is powered by an electric motor driven by a battery and it is remotely controlled.

In patent application CN113043876 (A) by HANGZHOU JIMU TECH CO LTD, titled "Intelligent Automobile Charging Robot" an intelligent vehicle charging robot is described. It features, among other components, a multi-axis rotating arm assembly, a lighting unit, a sensor unit, a collision-prevention assembly, an universal auxiliary wheel assembly, a drive unit and an automatic charging interface. The multi-axis rotating arm assembly includes an electric vehicle charging gun, a binocular camera sensor assembly, a first rotating connector, a second rotating connector, a third rotating connector and a fourth rotating connector. The robot body is equipped with an emergency stop switch unit and an information display unit on its upper cover plate.

The robot can automatically perform vehicle charging both, indoors and outdoors. The described charging robot operates from a fixed point, which limits it to serving only one or two vehicles simultaneously.

In patent application WO2022175165 (A1) by LUG TECH [FR], titled "DEVICE FOR CHARGING ELECTRIC VEHICLES" a charging device for a parking space is described. The device includes at least one electric power supply, at least one mobile connector device equipped with an electric power cable that can be connected to an interface for inductive charging of a vehicle, and an operator robot capable of positioning the mobile charging connector opposite the vehicle's inductive charging interface. According to the invention, the charging device also includes securing mechanisms capable of holding the mobile connector device in place opposite of the charging interface.

The disadvantage of the above solutions is that either the vehicle must be properly oriented and positioned relatively precisely at the charging station, or a free-moving robot takes the charging gun to the vehicle's charging connector. Furthermore, moving charging robots can only perform the charging process on evenly smooth solid surfaces, such as the paved surfaces of urban parking lots or parking garages.

In the solution according to the invention, the UR10e type robot placed on an extending arm can reach the charging connector located at the farthest point on any type of electric vehicle, regardless of whether the vehicle is parked nose-first or tail-first in the designated charging parking space. Thanks to the rail system, charging is possible at multiple designated parking spaces, allowing the charging system according to the invention to serve several electric vehicles simultaneously. Another significant advantage of the system is that it can be installed temporarily or permanently in locations where a smooth, solid surface is not available. With a container-based design, the system can be installed even in outdoor event areas, on dirt or grassy terrain, as long as there is an access to a nearby electrical power network.

### The brief description of the invention:

The charging system consists of an industrial robot mounted on an extending arm, fixed to a cart powered by an electric motor that moves along a rail, typically positioned in front of vehicle parking spaces in parallel. The industrial robot - in this case, the UR10e robot - is equipped with an industrial gripping mechanism capable of holding and securing the electric charging gun. This makes it relatively easy to install the system in places such as store's or shopping center's parking lots, or even at temporary event venues, for example, in a transport container.

The operation of the system and the charging process consists of the following steps:
- After the vehicle detection, vehicle identification and charging authorization, the rail-arm system directs the robot to the vehicle's charging connector (the orientational position of the charging connector on the vehicle is stored in the charging system database).

The goal of vehicle detection is to determine whether the vehicle is parked in the precisely anticipated position. Vehicle detection is performed by a pair of pressure sensors, with a radar sensor placed between them for enhanced safety. The pressure sensors are designed with strain gauges that detect when the vehicle's two front or two rear wheels are on them.

Vehicle identification is carried out in two ways: firstly, by reading the license plate using a camera and license plate reading algorithm at the charging station, and secondly, through the vehicle owner's identification via a mobile application.

Charging authorization takes place after the robot releases the charging gun placed into the socket and moves away from the vehicle. The charging authorization is carried out by the charging station.
- The camera located on the end-effector of the robotic arm determines the precise position and orientation of the charging gun holder pillar, the charging gun and the vehicle's charging socket.
- The robot grabs the charging gun with a special gripper, inserts it into the charging socket, then releases the gun and moves away from the vehicle.
- Following this, the charging station launches the charging process.
- After the charging is completed or interrupted, the robot removes the charging gun from the vehicle in a manner similar to the steps above and returns it to the charging gun holder pillar.
- During the robot's movement, the system continuously monitors the clearance of the workspace and, in the event of detecting a person or other obstacle, it stops the robot movement. As soon as a person or another obstacle leaves the robot's motion workspace, the robot starts moving again and continues its actions.

### The architecture of the mechanical system:

The main components of the electric vehicle charging robot system according to the invention are presented with the help of figures:
1. Figure 1 shows the structure of the robot system. The figure depicts the 3 moving cart with a 4 wheel system running on the 5 rail system, and the 1 collaborative robot mounted on the 2 extending arm.
2. In Figure 2, the 3 moving cart is shown with and advantageous designed 4 wheel system, consisting of 6 upper wheels, 7 lower wheels, and 8 side wheels.
3. Figure 3 shows the 5 rail system with the 9 fixing elements and the 10 rails. The figure illustrates, that in an advantageous design, the 10 rails are C-shaped.
4. Figure 4 depicts the structure of the 2 extending arm. The figure shows the 11 lower plate, with the position of the 12 robot base axis formed on it, the placement of the 13 motor base axis, the 14 cable groove, the 15 upper plate and the 16 ballast weights.
5. Figure 5 shows the structure of the 3 moving cart, including the arm 17 extension motor, arm 18 arm drive reductor, 19 cart drive motor, 20 cart drive reductor, 21 robot controller, 22 electronics that drive the motors, 23 frame structure and the 24 energy chain.
6. Figure 6 shows the 1 collaborative robot. The 2 extending arms, 35 robot arms and 36 robot head are visible

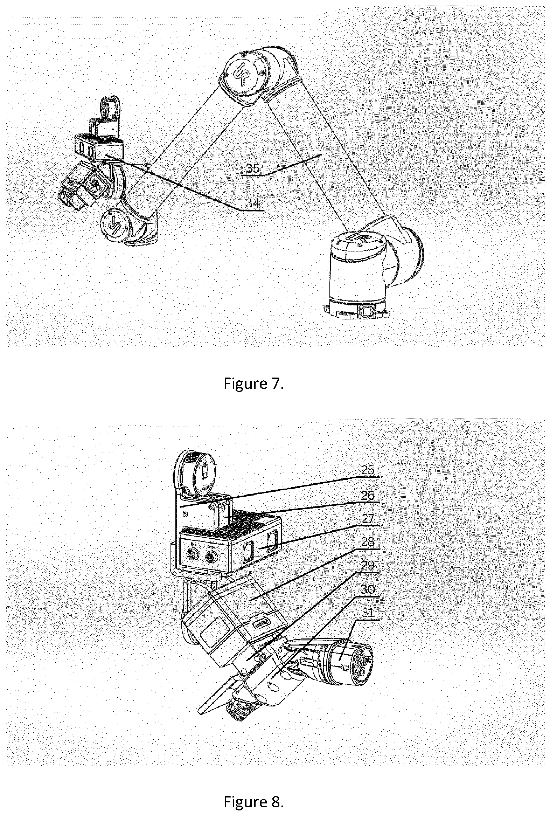

7. Figure 7 shows the collaborative robot and the mounted 27 3D positioning camera, 26 distance meter and 34 charging gun grip unit.
8. Figure 8 shows the 25 camera and distance meter holder mounted on the arm of the 1 collaborative robot, the 26 distance sensor, the 27 3D positioning camera, the 28 industrial gripper, the 29 gripping fingers, the placement of the 30 securing bracket and the 31 charging gun.
9. Figure 9 shows the 32 guide groves that assist the gripping of the 30 securing bracket and the 33 caliber (calibration plate) mounted on the 31 charging gun.

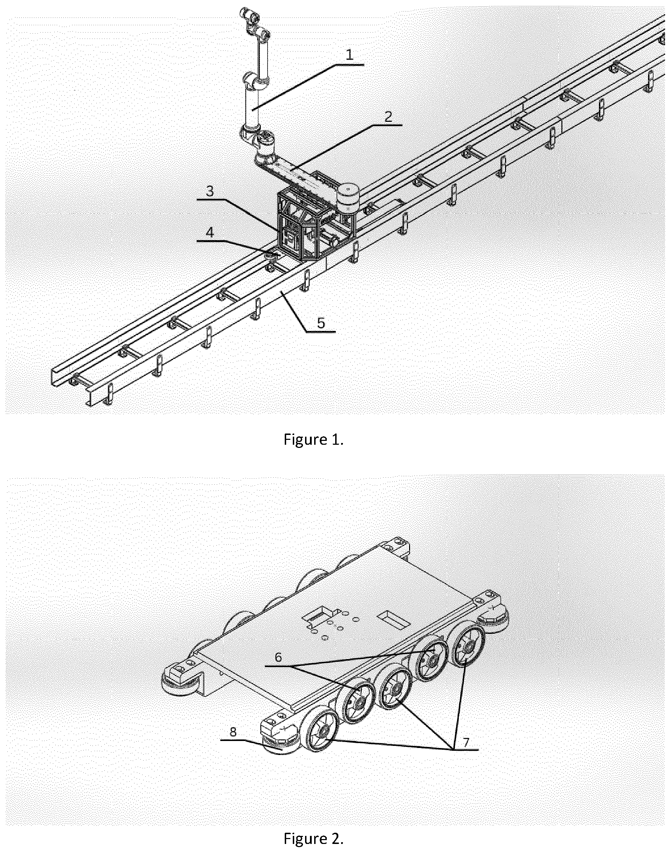

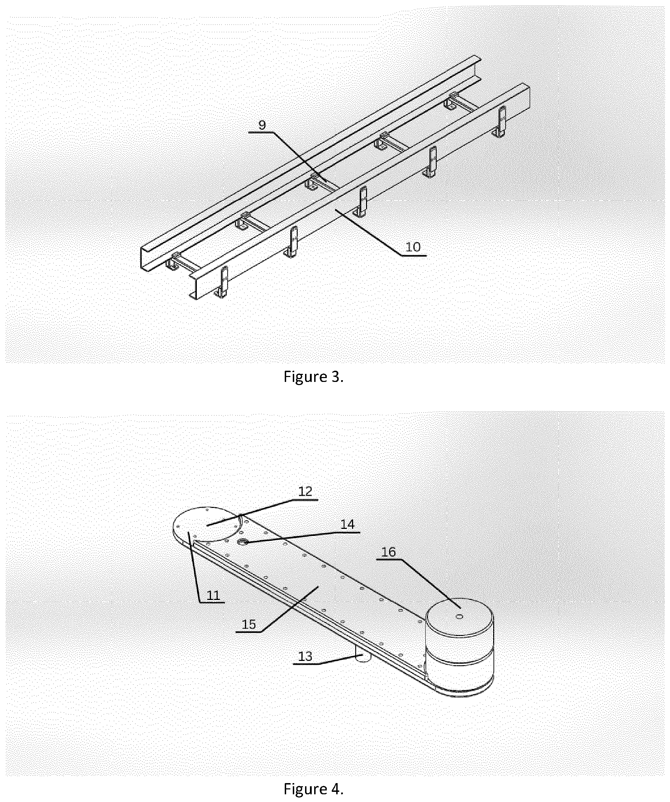

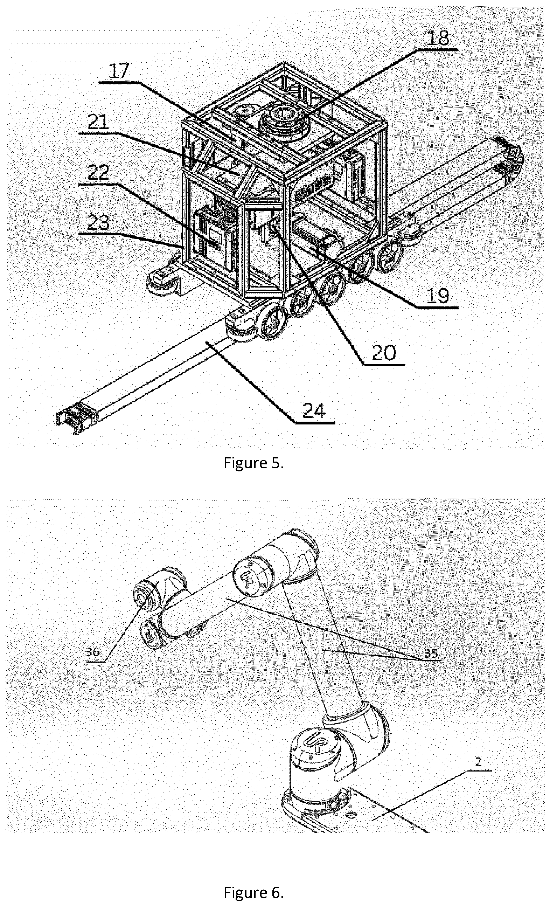

The mechanical system enables the horizontal, two-dimensional movement of the 1 collaborative robot that performs the charging. Its main components include the 5 rail system, the 4 wheel system, the 3 moving cart, the 2 extending arm and the 1 collaborative robot itself (see Figure 1.). The rail and wheel systems ensure longitudinal, rail-parallel movement (Figures 2. and 3.), while the extending arm is responsible for the lateral, rail-perpendicular extension (Figure 4.). The electronic and mechanical elements responsible for the drive and robot control are located in the 3 moving cart (Figure 5).

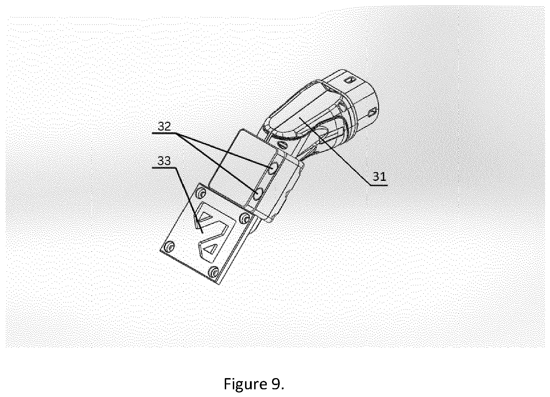

The system includes a specially designed 30 securing bracket that facilitates the gripping of the 31 charging gun, with 33 guide grooves and the 33 caliber. (Figure 9.), which is responsible for securely holding the 31 charging gun with a positional tolerance, as well as providing feedback on the gripping status.

### Longitudinal-horizontal movement:

The longitudinal-horizontal movement of the robot, which can extend over several tens of meters (in the implemented system this is 8 meters) is achieved using a rail and wheel system. The 4 wheel system (see Figure 2.) runs on preferable C-shaped 10 steel rails, which are mounted with steel 9 fixing elements (see Figure 3.). The wheels on both sides of the 4 wheel system serve three main functions. The 7 lower wheels support the weight of the structure, the 6 upper wheels prevent tipping and the two 8 side wheels ensure straight movement along the rail. The size and hardness of the wheels were determined based on the stresses encountered during movement and surface irregularities. The positions of the two 8 side wheels and the 6 upper wheels are precisely adjustable to ensure the perfect fit with the 10 rail.

### Lateral movement:

The robot's movement in the direction perpendicular to the 10 rails is provided by the 2 extending arm (see Figure 4.). This arm is mounted on the 3 moving cart and it is connected to the 18 arm drive reductor (see Figure 5.). The robot is positioned at the end of the arm (12 robot base axis) and performs rotational movement around the cart's symmetry axis (13 cart base axis). This design allows the robot to move laterally, with a maximum distance corresponding to the distance between the two base axes, which in the implemented system is 0.65 meters.

The 2 extending arm consist of two parts (11 lower plate and 15 upper plate), between which the signal and power cables connected to the robot are routed through the 14 cable grove. In order to compensate the robot's weight, 16 ballast weights are placed at the opposite end of the 2 extending arm. The mass of these ballast weights was determined through dynamic simulations.

One of the tasks of the 3 moving cart is to align the 4 wheel system and the 2 extending arm, as well as to house the electromechanical components. The cart contains the motors, drive reductors and motor drive electronics necessary for longitudinal and lateral movement, as well as the robot's control box.

The motors and their associated drives are standard 750 W servo systems. The longitudinal movement of the cart is achieved using a toothed belt (timing belts) and epicyclic gear (planetary gear) reductor. For the arm movement, a harmonic reductor was selected to provide a higher reduction and facilitate cable management.

The 23 frame structure of the cart is made of welded steel profiles, which are covered by a steel sheet enclosure. The cart is connected to the control computer and power source by a sliding-type 24 energy chain placed in the center of the rail system.

### 34 Charging gun gripping unit:

The 34 charging gun gripping unit consists of an 28 industrial gripper, the 29 gripping fingers designed for it and the 30 securing bracket designed for the charging gun (see Figure 9.). During the gripping, the 29 gripping fingers must be positioned above the 30 securing bracket, and the conical pins on the fingers align with the conical recesses in the bracket as the fingers close. For positional tolerance, the conical-shaped 32 guide groves are located on the upper part of the bracket (see Figure 9).

### A detailed description of the electric vehicle charging robot system according to the invention

In the electric vehicle charging robot system according to the invention, which includes a collaborative robot equipped with a 25 camera and distance meter holder, 26 distance meter sensor, 27 positioning camera and a 28 gripper unit with 29 gripping fingers, designed to hold a 30 charging gun:
- The 1 collaborative robot is rotatably connected to the 2 extending arm of the 3 moving cart with a 4 wheel system running on 5 rail system, through the 12 robot base axis (Figure 1).
- The 2 extending arm is rotatably inserted into the 18 arm drive reductor, which is connected to the 17 arm drive motor on the 3 moving cart via the 13 cart base axis (Figures 4. and 5.).
- On the 3 moving cart, there is also the 19 cart drive motor driving the 4 wheel system with its 20 cart drive reductor, the 21 robot controller, the 22 motor drive electronics and the 24 energy chain that electrically connects the 3 moving cart and the corresponding electronic devices mounted on the 3 moving cart to the external power source (Figure 5.).

In one preferred embodiment, the 12 robot base axis is located at the end of the longer extending section of the 11 lower plate of the 2 extending arm, while the 16 ballast weights are fixed to the end of the shorter extending section. The 14 cable routing is designed within the 11 lower plate, which is enclosed by the 15 upper plate (Figure 4.).

In another advantageous configuration, the 4 wheel system consists of 6 upper wheels, 7 lower wheels and 8 side wheels mounted on both sides of the 3 moving cart (Figure 2.).

The 5 rail system preferably consists of two C-shaped 10 rails and 9 fixing elements (Figure 3.).

The distance between the 12 robot base axis and the 13 cart base axis on the 2 extending arm is preferably 50-80 cm.

In a preferably designed electric vehicle charging robot system according to the invention, the 1 collaborative robot has a reach of 100.0-150.0 cm, a payload capacity of up to 13 kg, a base area surface with a maximum diameter of 20.0 cm and a weight of up to 35 kg.

The invention relates to a method for automatic charging electric vehicles using an electric vehicle charging robot system, where:
- following the vehicle detection and identification, the 3 moving cart, operating on the 5 rail system, transports the 1 collaborative robot to the corresponding vehicle, the 2 extending arm on the 3 moving cart pivots outward, positioning the 1 collaborative robot near the charging socket, within the robot's operating/working range.
- the 27 3D camera mounted on the end-effector at the end of the arm of the 1 collaborative robot determines the exact position and orientation of the charging gun holder pillar, the 31 charging gun and the vehicle's charging socket.
- The 1 collaborative robot, using the 28 industrial gripper, grips the 31 charging gun, inserts it into the charging socket, then releases the 31 charging gun and moves away from the vehicle.
- Subsequently, the charging station initiates the charging process.
- After the completion or interruption of the charging process, the 1 collaborative robot, following steps similar to those described above, removes the 31 charging gun from the vehicle and places it back on the charging gun holder pillar.

In a preferred embodiment of the method according to the invention, the gripping unit of the 31 charging gun uses the 29 gripping fingers to grab the 31 charging gun via the 30 securing bracket equipped with 32 guide groves and the 33 caliber. The 33 caliber is an aluminum calibration plate designed to contain three-dimensional features/patterns that are recognized by the 27 3D positioning camera, thereby detecting the calibration plate's position and orientation in space. The same caliber is placed next to the 31 charging gun and the charging gun holder pillar, and by knowing the exact position and orientation of the calibration plate in space, the positions and orientations of the charging gun and the charging gun holder pillar can be determined in space through a simple offset.

In another preferred embodiment, the electric vehicle charging robot system described in the invention is installed, either temporarily or permanently, on the ground - potentially on grassy terrain - using the 5 rail system, and can be deployed in indoor or outdoor locations.

### List of references:

1. collaborative robot (UR10e)
2. extending arm
3. moving cart
4. wheel system
5. rail system
6. upper wheels
7. lower wheels
8. side wheels
9. fixing element
10. rail (C shape)
11. (extending arm) lower plate
12. robot base axis
13. cart base axis
14. cable groove
15. (extending arm) upper plate
16. ballast weights
17. arm drive motor
18. arm drive reductor
19. cart drive motor
20. cart drive reductor
21. robot controller
22. electronics that drive motors
23. frame structure
24. energy chain
25. camera and distance meter holder
26. distance sensor
27. 3D positioning camera
28. industrial gripper
29. gripping fingers
30. securing bracket (mounting bracket)
31. charging gun
32. guide groves
33. caliber (calibration plate)
34. charging gun grip unit
35. robot arm
36. robot head

## Claims

1. An electric vehicle charging robot system equipped with a collaborative robot that includes a charging gun grip unit consisting of an industrial gripper with gripping fingers, a distance meter and a 3D positioning camera, **characterized in that**:
- the collaborative robot (1) is rotatably connected to the extending arm (2) of a moving cart (3) equipped with a wheel system (4) operating on a rail system (5) through the robot base axis (12).
- cart base axis (13) of the extending arm (2) is rotatably fitted into the arm drive reductor (18), which is connected to the arm drive motor (17) on the moving cart (3).
- the moving cart (3) is also equipped with the cart drive motor (19) for powering the wheel system (4), the cart drive reductor (20), the robot controller (21), the electronics that drive motors (22) and the energy chain (24), which electrically connects the moving cart (3) and the electrical units mounted on it to an external power source.

2. The electric vehicle charging robot system according to claim 1, **characterized in that** the robot base axis (12) is located at the end of the longer extending section of the lower plate (11) of the extending arm (2), ballast weights (16) are attached to the end of the shorter extending section, a cable groove (14) is formed on the lower plate (11) and the lower plate (11) is enclosed by an upper plate (15).

3. The electric vehicle charging robot system according to claim 1 or 2, **characterized in that** the wheel system (4) consists of upper wheels (6), lower wheels (7) and side wheels (8) mounted on both sides of the moving cart (3).

4. The electric vehicle charging robot system according to any of claims 1-3, **characterized in that** the rail system (5) consists of two C-shaped rails (10) and fixing elements (9).

5. The electric vehicle charging robot system according to any of the preceding claims, **characterized in that** the distance between the robot base axis (12) and the cart base axis (13) on the extending arm (2) is 50-80 cm.

6. The electric vehicle charging robot system according to any of the preceding claims, **characterized in that** the collaborative robot (1) has a reach of 100-150 cm, a load capacity of up to 13 kg, a base area with a maximum diameter of 20 cm and a weight of up to 35 kg.

7. A method for the automatic charging of electric vehicles using an electric vehicle charging robot system, **characterized in that**:
- following the vehicle identification, the moving cart (3) on the rail system (5) transports the collaborative robot (1) to the given vehicle, the extending arm (2) on the moving cart (3) rotates outward, positioning the collaborative robot (1) near the charging socket, bringing it within the robot's operating range;
- the 3D positoning camera (27) mounted on the robot head (34) determines the exact position and orientation of the charging gun holder pillar, the charging gun (31) and the vehicle's charging socket;
- the collaborative robot (1), using the industrial gripper (28), grips the charging gun (31), inserts it into the charging socket, then releases the charging gun (31) and moves away from the vehicle;
- subsequently, the charging station initiates the charging process;
- after the completion or interruption of the charging process, the collaborative robot (1) removes the charging gun (31) from the vehicle and places it back on the charging gun holder pillar, similar to the steps described above.

8. The method according to claim 7, **characterized in that** the gripping fingers (29) of the charging gun grip unit (34) using the guiding grooves (32) formed on the securing bracket (30) attached to the charging gun (31) and the calibration plate (33).

9. The method according to claim 7 or 8, **characterized in that** the electric vehicle charging robot system is installed temporarily or permanently on the ground, potentially on grassy terrain, through the rail system (5) in an outdoor location.
